# EUROPÄISCHE PATENTSCHRIFT

(11) **EP 3 440 388 B1**
(45) Veröffentlichungstag und Bekanntmachung des Hinweises auf die Patenterteilung: **22.04.2020**
(21) Anmeldenummer: 17714744.4
(22) Anmeldetag: 31.03.2017
(51) Int. Cl.: F16K 51/02, F16K 3/02, F16K 3/18, F16K 3/20

(54) **VERSCHLUSSEINRICHTUNG**
CLOSURE DEVICE
DISPOSITIF DE FERMETURE

(30) Priorität: 08.04.2016 AT 1852016
(43) Veröffentlichungstag der Anmeldung: 13.02.2019
(73) Patentinhaber: VAT Holding AG, 9469 Haag (CH)
(72) Erfinder: NEUMEIR, Anton, 86415 Mering (DE); ANGST, Christoph, 9493 Eichberg (CH); SUMMER, Karlheinz, 6700 Bludenz (AT); DUELLI, Bernhard, 6834 Übersaxen (AT)
(74) Vertreter: Fechner, Thomas
(86) Internationale Anmeldenummer: PCT/EP2017/057642
(87) Internationale Veröffentlichungsnummer: WO 2017/174448

(56) Entgegenhaltungen:
- EP-A1- 1 577 592
- DE-A1- 4 028 182
- FR-A1- 2 283 375
- JP-A- 2005 240 883
- JP-A- 2006 046 489
- US-A1- 2012 061 605

## Beschreibung

Die vorliegende Erfindung betrifft eine Verschlusseinrichtung mit einem Verschlussorgan zum Verschließen einer, von einem Ventilsitz der Verschlusseinrichtung umgebenen Öffnung der Verschlusseinrichtung, wobei die Verschlusseinrichtung einen Öffnungszustand des Verschlussorgans, in dem das Verschlussorgan die Öffnung zum Hindurchführen eines Gegenstandes durch die Öffnung zumindest teilweise, insbesondere vollständig, freigibt, und einen Zwischenzustand des Verschlussorgans, in dem das Verschlussorgan ohne Kontakt mit dem Ventilsitz in Deckung mit der Öffnung gebracht ist, und einen Schließzustand des Verschlussorgans, in dem das Verschlussorgan mittels einer Dichtung der Verschlusseinrichtung am Ventilsitz zumindest anliegt, aufweist, wobei die Dichtung einen Hohlraum aufweist, welcher von einer Druckquelle der Verschlusseinrichtung mit einem Druckmedium beaufschlagbar ist. Verschlusseinrichtungen dieser Art sind beim Stand der Technik an sich bekannt. Es wird hierzu beispielsweise auf die WO 2011/091451 A1 verwiesen. Gemäß dieser Schrift wird das Druckmedium bei einer entsprechenden Stellung eines Schaltventils gegen Atmosphärendruck aus dem Hohlraum der Dichtung abgelassen, wie dies vor allem aus Fig. 11 dieser Schrift hervorgeht.

Weitere Verschlusseinrichtungen werden aus US 2012/061605 A1 und EP 1 577 592 A1 bekannt.

Die Lebensdauer der Dichtung ist bei Verschlusseinrichtungen der genannten Art oft dahingehend entscheidend, wie oft die Verschlusseinrichtungen einem Service unterzogen werden müssen. Die Lebensdauer der Dichtung ist daher ein wichtiges Kriterium bei der Frage, wie hoch die Instandhaltungskosten für solche Verschlusseinrichtungen bei einem dauerhaften Betrieb sind.

Aufgabe der Erfindung ist es, Verschlusseinrichtungen der oben genannten Art dahingehend zu verbessern, dass die Dichtungen eine längere Lebensdauer haben und für die Verschlusseinrichtungen daher weniger Wartungsaufwand anfällt.

Zur Lösung der genannten Problematik schlägt die Erfindung vor, dass die Verschlusseinrichtung eine Saugvorrichtung zum Absaugen des Druckmediums aus dem Hohlraum der Dichtung aufweist.

Im Gegensatz zum Stand der Technik ist gemäß der Erfindung somit vorgesehen, das Druckmedium mittels einer Saugvorrichtung aktiv aus dem Hohlraum der Dichtung abzusaugen. Hierdurch kann die Dichtung zum einen schneller entleert und zum anderen vor allem in einen vorgesehenen zusammengezogenen Zustand gebracht werden, welcher verhindert, dass die Dichtung beim Bewegen des Verschlussorgans beschädigt bzw. abgenutzt wird. Im Gegensatz zum Stand der Technik, bei dem das Druckmedium aus dem Hohlraum der Dichtung in der Regel passiv einfach gegen Umgebungsdruck abgelassen wird, ist gemäß der Erfindung somit mittels der erfindungsgemäß vorgesehenen Saugvorrichtung ein aktives Absaugen des Druckmediums aus dem Hohlraum der Dichtung vorgesehen. Bei der Saugvorrichtung handelt es sich somit bevorzugt um eine technische Einrichtung, mit der gezielt ein Absaugen des Druckmediums aus dem Hohlraum möglich ist. Sowohl die Druckquelle als auch die Saugvorrichtung können in diesem Sinn als Pumpe ausgeführt sein. Es kann dabei vorgesehen sein, dass die Druckquelle und die Saugvorrichtung voneinander getrennte Bauteile sind, welche über ein Schaltventil mit dem Hohlraum der Dichtung wechselweise verbunden werden können. Die Druckquelle und die Saugvorrichtung können aber auch als eine gemeinsame Vorrichtung, die sowohl die Druckbeaufschlagung als auch das Absaugen des Druckmediums aus dem Hohlraum ermöglicht, ausgeführt sein. Insbesondere bietet es sich in diesem Zusammenhang, dass die Druckquelle und die Saugvorrichtung als eine gemeinsame Pumpe ausgeführt sind. In Ausgestaltungsformen der Erfindung kann somit vorgesehen sein, dass die Druckquelle und/oder die Saugvorrichtung als eine, vorzugsweise gemeinsame, Pumpe ausgeführt ist bzw. sind. Als Druckquelle können aber auch Druckleitungen oder dergleichen verwendet werden. Die Saugvorrichtung erzeugt beim Absaugen des Druckmediums aus dem Hohlraum günstigerweise einen Unterdruck, der unter dem Atmosphärendruck liegt. Das Druckmedium, mit dem der Hohlraum der Dichtung beaufschlagt wird, kann sowohl flüssig als auch gasförmig sein. Es kann sich also sowohl um pneumatische als auch hydraulische Systeme bzw. Druckquellen und Saugvorrichtungen handeln.

Beim Beaufschlagen des Hohlraums der Dichtung mit Druckmedium wird die Dichtung bevorzugt ausgedehnt. Sie vergrößert beim Beaufschlagen des Hohlraums mit Druckmedium also günstigerweise ihr Volumen und/oder ihre Außenabmessungen. Beim Absaugen des Druckmediums mittels der Saugvorrichtung aus dem Hohlraum der Dichtung zieht sich die Dichtung bei bevorzugten Ausgestaltungsformen der Erfindung zusammen, sodass ihr Volumen und ihre äußeren Abmessungen abnehmen.

Die Dichtung ist in bevorzugten Ausgestaltungsformen um die jeweilige Öffnung umlaufend, vorzugsweise umfangsgeschlossen, ausgebildet. Sie kann also z.B. eine Art in sich geschlossenen Schlauch bilden. Die Dichtung kann in das Verschlussorgan aber auch in den Ventilsitz integriert bzw. an dem jeweiligen Bauteil fixiert sein. Die Verschlusseinrichtung weist günstigerweise ein Gehäuse auf, wobei dann günstigerweise vorgesehen ist, dass die Ventilsitze Teil des Gehäuses sind oder an diesem fixiert sind, während das Verschlussorgan relativ zum Gehäuse bewegt werden kann. Es können auch sowohl am Ventilsitz als auch am Verschlussorgan jeweils eine Dichtung oder mehrere Dichtungen der genannten Art vorhanden, vorzugsweise fixiert, sein.

Erfindungsgemäße Verschlusseinrichtungen könnten auch als Ventile bezeichnet werden. Es handelt sich dabei günstigerweise um sogenannte Transferventile durch deren Öffnung Gegenstände transportiert werden können, sofern die Öffnungen nicht vom Verschlussorgan verschlossen sind. Insofern könnte man auch bei den Öffnungen von Transferöffnungen sprechen. Das Verschlussorgan ist günstigerweise in bevorzugten Ausgestaltungsformen als Teller bzw. Ventilteller ausgeführt.

Erfindungsgemäße Verschlusseinrichtungen bzw. Ventile können vor allem auch in der Unterdrucktechnik eingesetzt werden. Man könnte also auch von Unterdruckventilen sprechen. Der Unterdruckbereich beschreibt dabei Betriebszustände, bei denen Drücke unterhalb des Atmosphärendrucks erreicht werden. Bevorzugt handelt es sich dabei um Betriebszustände mit Drücken (Absolutwerte) von 100 mbar (Millibar) bis 1 mbar.

Erfindungsgemäße Verschlusseinrichtungen zeichnen sich dadurch aus, dass das Verschlussorgan zumindest drei Zustände, nämlich den Öffnungszustand, den Zwischenzustand und den Schließzustand einnehmen kann. Im Öffnungszustand gibt das Verschlussorgan die Öffnung teilweise oder vollständig frei, sodass ein Gegenstand oder ein Fluid durch die Öffnung hindurchführbar ist. Im Zwischenzustand hingegen befindet sich das Verschlussorgan bereits in Deckung mit der Öffnung, sodass in diesem Zustand in der Regel zumindest keine Gegenstände mehr durch die Öffnung hindurchgeführt werden können. Das Verschlussorgan besitzt im Zwischenzustand aber noch keinen Kontakt mit dem Ventilsitz. Es ist also ohne Kontakt bzw. frei von physischem Kontakt mit dem Ventilsitz in Deckung mit der Öffnung gebracht. Im Schließzustand liegt die bzw. zumindest eine der Dichtungen der Verschlusseinrichtung sowohl am Ventilsitz als auch am Verschlussorgan an. Die Dichtung kann dabei, wie oben bereits ausgeführt, sowohl am Ventilsitz als auch am Verschlussorgan dauerhaft fixiert sein. In bevorzugten Ausgestaltungsformen der Erfindung liegt das Verschlussorgan mittels der Dichtung im Schließzustand nicht nur am Ventilsitz an sondern ist mittels der Dichtung mit diesem abdichtend verbunden bzw. wird an den Ventilsitz unter Zwischenschaltung der Dichtung angedrückt.

Bei den obigen Ausführungen ist zu beachten, dass das Verschlussorgan zwischen dem Öffnungszustand und dem Zwischenzustand in der Regel transportiert bzw. bewegt wird. Es kann sich dabei um eine Schwenk- wie auch um eine Verschiebebewegung oder Überlagerung von diesen Bewegungsarten handeln. Beim Übergang zwischen dem Zwischenzustand und dem Schließzustand hingegen muss das Verschlussorgan nicht zwingend bewegt werden. Es kann auch vorgesehen sein, dass ausgehend vom Zwischenzustand ausschließlich die Dichtung durch Beaufschlagen ihres Hohlraums mit Druckmedium ausgedehnt wird, sodass das Verschlussorgan dann im Schließzustand mittels der bzw. einer der Dichtungen am Ventilsitz zumindest anliegt. Dies schließt aber nicht aus, dass auch oder nur das Verschlussorgan zwischen dem Zwischenzustand und dem Schließzustand bewegt wird. Es kann z.B. auch vorgesehen sein, dass das Verschlussorgan aktiv unter Zwischenschaltung der Dichtung an den Ventilsitz gedrückt wird und erst dann die Dichtung durch Beaufschlagen des Hohlraums mit Druckmedium so weit ausgedehnt wird, dass sie das Verschlussorgan gegen den Ventilsitz abdichtet. Auch Mischformen beider Vorgänge sind denkbar. In diesem Zusammenhang wird auch noch darauf hingewiesen, dass das Verschlussorgan im Schließzustand verschiedene Stellungen, insbesondere relativ zu einem Gehäuse der Verschlusseinrichtung, einnehmen kann. So ist es z.B. denkbar, dass der Schließzustand bereits durch Druckbeaufschlagung des Hohlraums der Dichtung mit Druckmedium erreicht ist und dann durch einen auf das Verschlussorgan wirkenden Differenzdruck das Verschlussorgan im Schließzustand zusätzlich an den Ventilsitz z.B. unter weiterer Komprimierung der Dichtung angedrückt wird, was eine Bewegung des Verschlussorgans zur Folge haben kann.

Ein Verfahren zum Betrieb einer erfindungsgemäßen Verschlusseinrichtung kann z.B. vorsehen, dass ausgehend vom Öffnungszustand das Verschlussorgan in den Zwischenzustand gebracht, also insbesondere verschoben und/oder geschwenkt wird. Anschließend kann zumindest eine Dichtung von der Druckquelle so mit Druckmedium beaufschlagt werden, dass durch ihre Ausdehnung und/oder eine entsprechende Bewegung des Verschlussorgans ausgehend vom Zwischenzustand der Schließzustand herbeigeführt wird. Anschließend kann das Verschlussorgan im Schließzustand mittels eines auf das Verschlussorgan wirkenden Differenzdrucks gegen den Ventilsitz gedrückt werden. Das Öffnen erfolgt dann in umgekehrter Reihenfolge. Hierzu muss in der Regel erst ein gegebenenfalls vorhandener Differenzdruck beseitigt werden. Anschließend wird das Druckmedium von der Saugeinrichtung aus dem Hohlraum der Dichtung abgesaugt und damit das Verschlussorgan vom Schließzustand in den Zwischenzustand gebracht. Anschließend kann dann das Verschlussorgan verschoben und/oder geschwenkt werden, um in den Öffnungszustand gebracht zu werden, in dem es die Öffnung ganz oder teilweise freigibt.

In besonders bevorzugten Ausgestaltungsformen der Erfindung ist vorgesehen, dass die Verschlusseinrichtung zwei, von jeweils einem Ventilsitz umgebene Öffnungen aufweist und das Verschlussorgan in dem Zwischenzustand ohne Kontakt mit den Ventilsitzen zwischen den Öffnungen angeordnet ist und in dem Schließzustand zwischen jedem der Ventilsitze und dem Verschlussorgan jeweils eine Dichtung angeordnet ist und das Verschlussorgan mittels zumindest einer der Dichtungen an zumindest einem der Ventilsitze zumindest anliegt, wobei jede der Dichtungen einen Hohlraum aufweist, welcher jeweils von der Druckquelle der Verschlusseinrichtung mit einem Druckmedium beaufschlagbar und von der Saugvorrichtung absaugbar ist. Die beiden jeweils von einem Ventilsitz umgebenen Öffnungen sind dabei günstigerweise miteinander fluchtend ausgeführt. Es kann sich wiederum um Öffnungen in einem Gehäuse der Verschlusseinrichtung handeln. Die Ventilsitze können wiederum Teil des Gehäuses oder an diesem fixiert sein. Es ist in diesem Zusammenhang noch darauf hinzuweisen, dass es im Schließzustand solcher Ausgestaltungsformen einer erfindungsgemäßen Verschlusseinrichtung grundsätzlich ausreicht, wenn das Verschlussorgan mittels nur einer der Dichtungen an zumindest einem der Ventilsitze zumindest anliegt. Es kann aber auch vorgesehen sein, dass das Verschlussorgan im Schließzustand mittels je einer Dichtung jeweils an einem der Ventilsitze anliegt. Insbesondere um im Schließzustand oder vom Zwischenzustand in den Schließzustand auf zumindest einen der Ventilsitze zu bewegt werden zu können, sehen bevorzugte Varianten der Erfindung vor, dass das Verschlussorgan pendelartig angeordnet, vorzugsweise aufgehängt ist. Das Verschlussorgan kann im Schließzustand oder vom Zwischenzustand in den Schließzustand parallel verstellbar an einer Führung angeordnet, vorzugsweise aufgehängt, sein. Entlang dieser Führung kann das Verschlussorgan zwischen dem Öffnungszustand und dem Zwischenzustand bewegbar, vorzugsweise verschiebbar und/oder verschwenkbar, sein. Die Führung kann hierzu eine Schienenführung oder dergleichen aufweisen. Es kann z.B. vorgesehen sein, dass das Verschlussorgan mittels zumindest zweier Gelenke der Verschlusseinrichtung und zumindest einem zwischen den Gelenken angeordneten Schwenkhebel der Verschlusseinrichtung an der bzw. einer Führung angeordnet, vorzugsweise aufgehängt, ist. Alternativ hierzu kann das Verschlussorgan auch mittels zumindest einer quer zu ihrer Längserstreckung auslegbaren Biegefeder der Verschlusseinrichtung an der bzw. einer Führung angeordnet, vorzugsweise aufgehängt, sein. Auch Mischformen dieser beiden Ausgestaltungsformen sind denkbar, z.B. indem man als Schwenkhebel eine entsprechend quer zu ihrer Längserstreckung auslenkbare Biegefeder verwendet. Im Fall von Gelenken sind die Gelenkachsen, um die die Gelenke schwenkbar sind, günstigerweise parallel zueinander angeordnet.

Ein weiterer Aspekt der Erfindung betrifft eine Verschlusseinrichtung mit einem Verschlussorgan zum Verschließen von zwei, jeweils von einem Ventilsitz der Verschlusseinrichtung umgebenen Öffnungen der Verschlusseinrichtung, wobei die Verschlusseinrichtung einen Öffnungszustand des Verschlussorgans, in dem das Verschlussorgan die Öffnungen zum Hindurchführen eines Gegenstandes durch die Öffnungen zumindest teilweise, insbesondere vollständig, freigibt, und einen Zwischenzustand des Verschlussorgans, in dem das Verschlussorgan ohne Kontakt mit den Ventilsitzen zwischen den Öffnungen angeordnet ist, und einen Schließzustand des Verschlussorgans, in dem das Verschlussorgan mittels zumindest einer Dichtung an zumindest einem der Ventilsitze zumindest anliegt, aufweist. Bei einer solchen Verschlusseinrichtung ist zur Lösung des oben genannten Problems vorgesehen, dass die Verschlusseinrichtung zumindest ein, vorzugsweise elastisches, Stellelement zum Ausrichten des Verschlussorgans in einer vorgegebenen oder vorgebbaren Zwischenstellung zwischen den Ventilsitzen aufweist. Durch solche Stellelemente kann sichergestellt werden, dass das Verschlussorgan, insbesondere im Zwischenzustand, von dem oder den Stellelementen in einer vorgegebenen oder vorgebbaren Zwischenstellung so zwischen den Ventilsitzen angeordnet wird, dass es beim anschließenden Bewegen des Verschlussorgans von dem Zwischenzustand in den Öffnungszustand nicht zur Kollision der Dichtung mit dem Ventilsitz oder anderen Bauteilen der Verschlusseinrichtung kommen kann. In anderen Worten sorgt das zumindest eine Stellelement dieses Aspekts der Erfindung also dafür, dass das Verschlussorgan in eine vorgegebene oder vorgebbare Zwischenstellung gebracht wird, um so Kollisionen der Dichtung mit anderen Bauteilen der Verschlusseinrichtung zu verhindern. Unter einer Zwischenstellung ist dabei eine Position bzw. Lage des Verschlussorgans zwischen den Ventilsitzen zu verstehen, während der Zwischenzustand im Gegensatz dazu verschiedene Stellungen des Verschlussorgans zulässt, so lange die oben genannten Kriterien des Zwischenzustands erfüllt sind. Die Zwischenstellung bzw. die Position, die das Verschlussorgan in der Zwischenstellung zwischen den Ventilsitzen einnimmt, kann durch das Stellelement fix vorgegeben sein. Es kann aber auch vorgesehen sein, dass das Stellelement selbst verstellbar bzw. einstellbar ausgeführt ist, sodass durch entsprechende Einstellung bzw. Verstellung des Stellelementes eine entsprechende Zwischenstellung des Verschlussorgans vorgegeben werden kann, also vorgebbar ist. Das Stellelement kann z.B. einen verschiebbar gelagerten, federbelasteten oder mittels eines elastomeren Körpers vorgespannten Stempel aufweisen. Die Vorspannung kann auch durch eine hydraulische oder pneumatische Feder erzeugt werden. Das Stellelement kann aber auch motorisch oder pneumatisch oder hydraulisch angetrieben sein. Vorzugsweise handelt es sich aber um ein elastisches Stellelement, welches ohne gesonderten Antrieb auskommt, wie dies z.B. bei einer Feder, einem Elastomerkörper oder einem anderen elastischen Körper der Fall ist. Das Stellelement kann z.B. an einem Gehäuse der Verschlusseinrichtung abgestützt bzw. fixiert sein und mit einem entsprechenden Stempel auf das Verschlussorgan einwirken. Auch eine Fixierung bzw. Abstützung des Stellelementes am Ventilsitz ist denkbar. Andersherum kann das Stellelement aber auch am Verschlussorgan fixiert bzw. abgestützt sein und mit einem entsprechenden Stempel auf den Ventilsitz einwirken. Auch ein Zusammenwirken des Stellelementes mit der genannten Führung ist grundsätzlich denkbar.

Besonders bevorzugte Ausgestaltungsformen dieses Aspekts der Erfindung sehen vor, dass die Verschlusseinrichtung auf jeder von zwei einander gegenüberliegenden Seiten des Verschlussorgans jeweils zumindest ein elastisches Stellelement zum Ausrichten des Verschlussorgans in der vorgegebenen oder vorgebbaren Zwischenstellung zwischen den Ventilsitzen aufweist.

Dieser Aspekt der Erfindung mit dem zumindest einen Stellelement kann unabhängig von der vorab geschilderten Erfindung als gesonderte Erfindung realisiert sein. Es ist aber natürlich auch eine Kombination dieser beiden Erfindungen und ihrer Ausgestaltungsformen möglich.

Die erfindungsgemäßen Merkmale werden bevorzugt in solchen Verschlusseinrichtungen realisiert, bei denen das Verschlussorgan vergleichsweise groß und/oder schwer ist. In diesem Zusammenhang kann vorgesehen sein, dass das Verschlussorgan einen Durchmesser von zumindest 600 mm (Millimeter) und/oder eine Masse von zumindest 100 kg (Kilogramm) aufweist. Konkret sind auch Ausgestaltungsformen denkbar, bei denen der Durchmesser des Verschlussorgans bzw. Verschlusstellers zumindest 3200 mm und die Masse dieses Verschlussorgans zumindest 1,5 t bzw. 2 t beträgt. Solche Verschlusseinrichtungen können z.B. in Eisenbahntunneln eingesetzt werden, um Streckenbereiche zwischen zwei Verschlusseinrichtungen unter Unterdruck setzen zu können. Andere Anwendungsformen von solch großen Verschlusseinrichtungen sind z.B. Prozesskammern, in denen sehr große Gegenstände wie z.B. Satelliten und dergleichen unter Unterdruckbedingungen bearbeitet und/oder hergestellt und/oder getestet werden sollen.

Es ist eine Führung der Verschlusseinrichtung vorgesehen, entlang der das Verschlussorgan zwischen dem Öffnungszustand und dem Zwischenzustand bewegbar ist.

Bevorzugte Ausgestaltungsformen erfindungsgemäßer Verschlusseinrichtungen sehen weiters vor, dass eine bzw. die Führung entlang der das Verschlussorgan zwischen dem Öffnungszustand und dem Zwischenzustand bewegbar ist, eine Linearführung ist. Es ist vorgesehen, dass die Führung bzw. eine oder mehrere Leitschienen der Führung, entlang der das Verschlussorgan zwischen dem Öffnungszustand und dem Zwischenzustand bewegbar ist, für den Schließzustand zumindest einen Freigabebereich aufweist bzw. aufweisen, in dem ein von der Führung bzw. der Leitschiene geführtes Element des Verschlussorgans zum Ermöglichen des Andrückens des Verschlussorgans an den Ventilsitz oder einen der Ventilsitze freigegeben ist. Das geführte Element des Verschlussorgans kann in diesem Freigabebereich z.B. auch mit dem oben genannten Stellelement zusammenwirken.

Generell wird darauf hingewiesen, dass soweit nichts anderes konkret angegeben ist, Zahlwörter wie z. B. ein im Sinne von zumindest ein, also von ein oder mehrere zu verstehen ist. Dies gilt auch für Zahlwörter wie zwei und dergleichen. Die genannten Bauteile können also auch jeweils mehrfach vorhanden sein, auch wenn sie nur im Singular genannt sind.

Weitere Merkmale und Einzelheiten bevorzugter Ausgestaltungsformen werden anschließend beispielhaft anhand von Ausführungsbeispielen erläutert. Es zeigen:

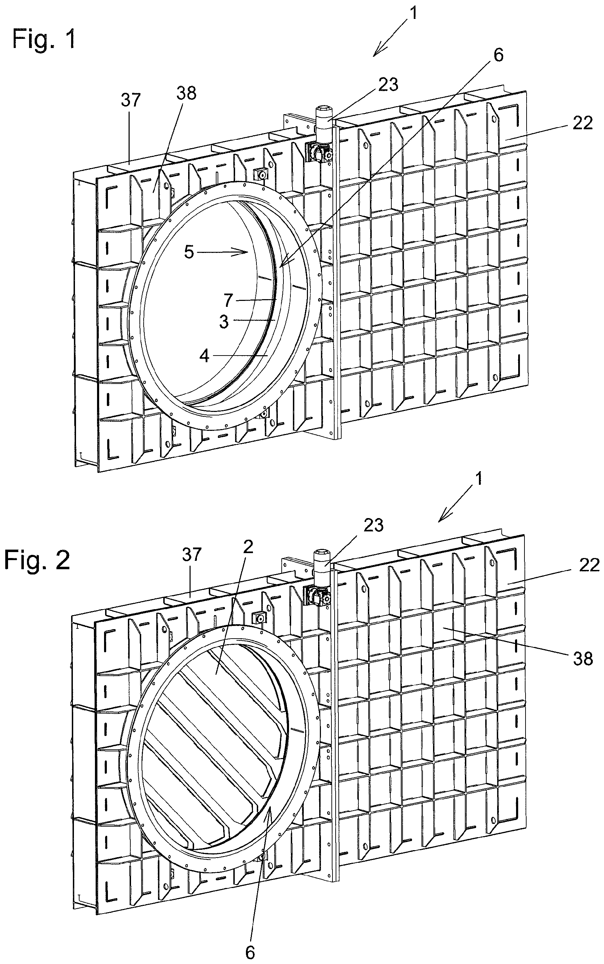

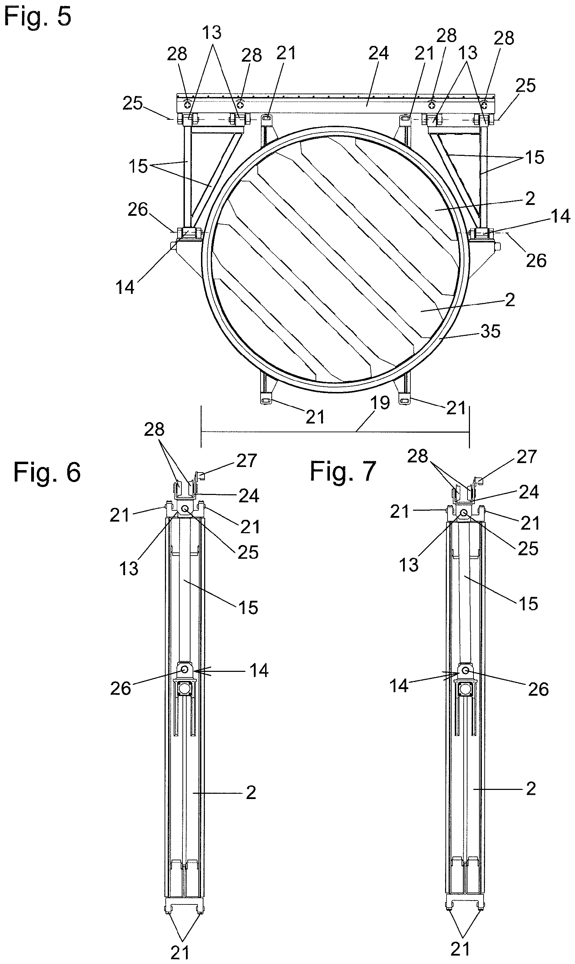

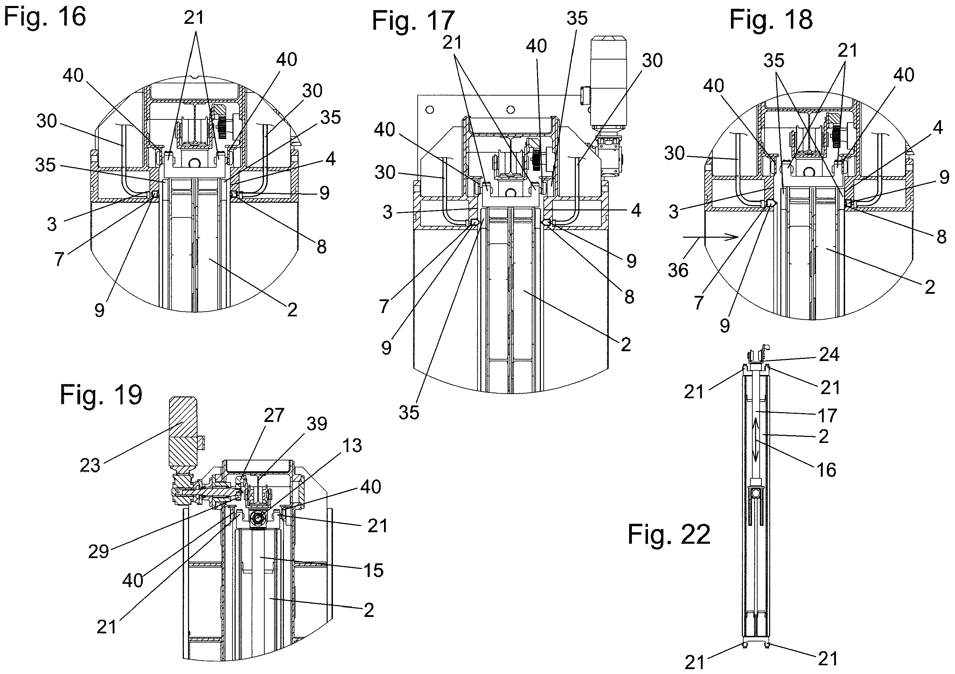

Fig. 1 bis 21 Darstellungen zu einem ersten Ausführungsbeispiel der Erfindung und Fig. 22 eine zu Fig. 6 analoge Darstellung einer in diesem Bereich demgegenüber geänderten Variante.

Die Fig. 1 und 2 zeigen die erfindungsgemäße Verschlusseinrichtung 1 in einer perspektivischen Darstellung. Sie weist ein Gehäuse 22 auf, in dem das Verschlussorgan 2 verschiebbar gelagert ist. Die Verschiebebewegung des Verschlussorgans 2 zwischen seinem Öffnungszustand gemäß Fig. 1 und seinem Zwischenzustand gemäß Fig. 2 erfolgt über einen Motor 23. In diesem Ausführungsbeispiel sind die mittels des Verschlussorgans 2 verschließbaren Öffnungen 5 und 6 im Öffnungszustand vollkommen freigegeben. Im Zwischenzustand deckt das Verschlussorgan 2 beide Öffnungen 5 und 6 zwar bereits vollständig ab, das Verschlussorgan 2 hat aber noch keinen Kontakt zu den Ventilsitzen 3 und 4, welche die Öffnungen 5 und 6 umgeben. Im Schließzustand ist zumindest eine der, vorzugsweise beide, Öffnungen 5 und 6 mittels der Dichtung 7 und 8 abgedichtet. Im gezeigten Ausführungsbeispiel weist das Gehäuse 22 eine erste Wand 37 und eine zweite Wand 38 auf. Im Öffnungszustand ist das Verschlussorgan 2 in einem Hohlraum zwischen diesen beiden Wänden 37 und 38 verborgen. Die Ventilsitze 3 und 4 sind in diesem Ausführungsbeispiel in das Gehäuse 22 integriert. Der Ventilsitz 3 ist fix mit der ersten Wand 37 verbunden. Der Ventilsitz 4 ist fix mit der zweiten Wand 38 verbunden.

Die beiden Öffnungen 5 und 6 sind im gezeigten Ausführungsbeispiel wie auch die sie umgebenden Ventilsitze 3 und 4 miteinander fluchtend angeordnet.

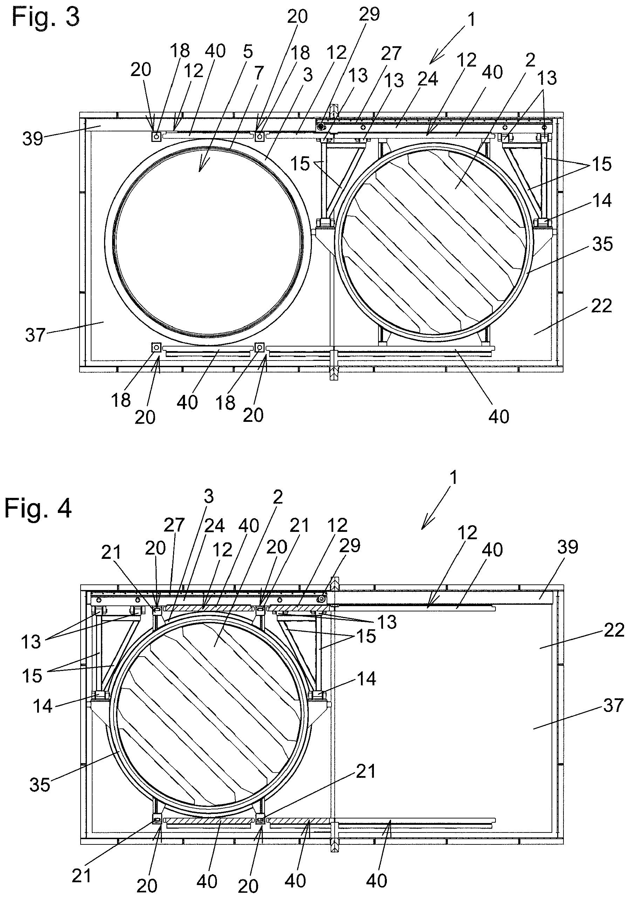

Die Fig. 3 und 4 zeigen nun einen Blick in das Gehäuse 22, wie er sich ergeben würde, wenn man die zweite Wand 38 und den Ventilsitz 4 entfernen würde. Fig. 3 zeigt wiederum den Öffnungszustand, in dem das Verschlussorgan 2 die Öffnung 5 und damit auch die hier nicht dargestellte, fluchtende Öffnung 6 vollständig freigibt. Fig. 4 zeigt die Stellung des Verschlussorgans im Zwischenzustand und im Schließzustand. In dieser Stellung gemäß Fig. 4 deckt das Verschlussorgan 2 die Öffnung 5 und 6 vollständig ab. In anderen Worten ist das Verschlussorgan 2 somit in Deckung mit den Öffnungen 5 und 6 gebracht.

Die Fig. 5, 6 und 7 zeigen das Verschlussorgan 2 mit seinem Schlitten 24, losgelöst von den anderen Bauteilen der Verschlusseinrichtung 1. Fig. 5 zeigt eine Frontalansicht auf das Verschlussorgan 2, die Fig. 6 und 7 zeigen Seitenansichten.

Der Schlitten 24 ist in dem hier gezeigten Ausführungsbeispiel samt Verschlussorgan 2 linear verschiebbar in der Führung 12 bzw. in deren hier als Doppel-T-Träger ausgeführten Aufhängung 39 gelagert. Zur Verschiebung entlang der Aufhängung 39 der Führung 12 weist der Schlitten Rollen 28 auf, welche in der Aufhängung 39 geführt sind. Um die lineare Bewegung des Schlittens 24 samt Verschlussorgan 2 zwischen den Stellungen gemäß der Fig. 3 und 4 zu realisieren, ist im hier gezeigten Ausführungsbeispiel der Motor 23 vorgesehen, welcher mit einem Zahnrad 29 in eine am Schlitten 24 fix befestigte Zahnstange 27 eingreift. Wenn der Motor 23 das Zahnrad 29 dreht, wird hierdurch der Schlitten samt Verschlussorgan 2 zwischen den Positionen gemäß der Fig. 3 und 4 hin und her bewegt. Die Führung 12, entlang der das Verschlussorgan 2 zwischen dem Öffnungszustand und dem Zwischenzustand bewegbar ist, ist in diesem Ausführungsbeispiel somit eine Linearführung. Der Antrieb für diese Linearbewegung könnte natürlich auch anders ausgeführt sein. Z.B. wäre es möglich, den Schlitten 24 samt Verschlussorgan 2 mittels elektrischer, hydraulischer oder pneumatischer Linearantriebe zwischen den Stellungen gemäß Fig. 3 und 4 zu bewegen.

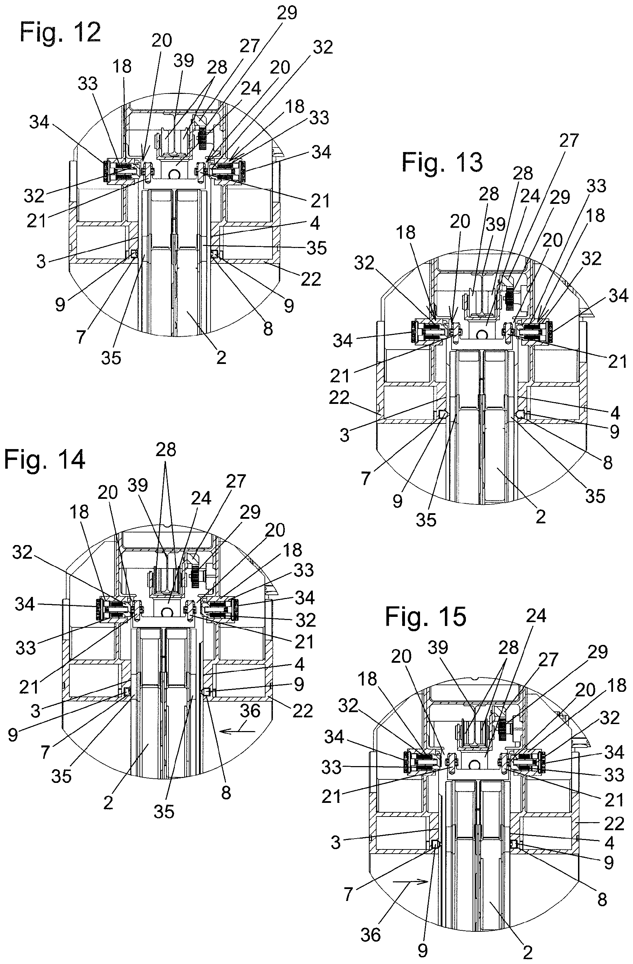

Im gezeigten Ausführungsbeispiel ist das Verschlussorgan 2 pendelartig angeordnet bzw. an der Führung 12 bzw. dem Schlitten 24 aufgehängt. Konkret ist das Verschlussorgan 2 im Schließzustand oder zwischen dem Zwischenzustand und dem Schließzustand parallel verstellbar an der Führung 12 aufgehängt. Hierzu sind in diesem Ausführungsbeispiel die Gelenke 13 und 14 vorgesehen, welche jeweils mittels der Schwenkhebel 15 miteinander verbunden sind. Die Gelenke 13 und 14 sind um ihre Schwenkachsen 25 bzw. 26 schwenkbar. Die Achsen 25 und 26 stehen dabei parallel zueinander und sind voneinander um die Längserstreckung der Schwenkhebel 15 distanziert. Das jeweils am Verschlussorgan 2 angeordnete Gelenk 14 befindet sich, wie hier besonders gut in den Fig. 3 bis 7 zu sehen ist, günstigerweise ungefähr im Mittelbereich, vorzugsweise im mittleren Drittel des Verschlussorgans 2, sodass das Verschlussorgan 2 pendelartig um die Gelenkachsen 26 verschwenkbar ist. Darüber hinaus ist das Verschlussorgan 2 zusammen mit den Schwenkhebeln 15 pendelartig um die Schwenkachsen 25 der Gelenke 13 schwenkbar. Dies ermöglicht eine Parallelverstellung des Verschlussorgans 2, um es plan an einen der Ventilsitze 3 oder 4 bzw. deren Dichtung 7 und 8 andrücken zu können, wie dies weiter unten noch anhand der Fig. 12 bis 18 genauer erläutert wird. Fig. 6 zeigt jedenfalls die Stellung, bei der das Verschlussorgan 2 in seiner Ausgangs- bzw. Zwischenstellung ist. Fig. 7 zeigt eine Situation, bei der das Verschlussorgan in Richtung hin zu einem der Ventilsitze gegenüber der Situation gemäß Fig. 6 parallel verstellt ist. Dies ist an der leicht ausgelenkten Stellung des Schwenkhebels 15 im Vergleich zu Fig. 6 gut zu erkennen. Der Ventilsitz 3 bzw. 4 ist in Fig. 7 nicht dargestellt.

Zusätzlich zu der Aufhängung 39 weist die Führung 12 auch, in diesem Ausführungsbeispiel fix mit den Wänden 37 und 38 verbundene, Leitschienen 40 auf. Diese dienen zur Führung der am Verschlussorgan 2 fix angeordneten geführten Elemente 21. Die Führung der geführten Elemente 21 und damit des Verschlussorgans 2 entlang der Leitschienen 40 sorgt beim Verschieben des Verschlussorgans 2 zwischen den Stellungen gemäß der Fig. 3 und 4 dafür, dass das Verschlussorgan in diesen Betriebszuständen nicht ungewollt bzw. zumindest nicht ungewollt stark um die Schwenkachsen 25 und 26 geschwenkt werden kann. Das Zusammenwirken der geführten Elemente 21 mit den Leitschienen 40 und damit mit der Führung 12 sorgt also für eine exakte Ausrichtung des Verschlussorgans 2, wenn es vom Öffnungszustand in den Zwischenzustand oder vom Zwischenzustand in den Öffnungszustand gebracht wird.

Die Führung 12 bzw. hier konkret die Leitschienen 40, weisen aber für den Schließzustand Freigabebereiche 20 auf, in denen das geführte Element 21 von der Führung 12 bzw. dessen Leitschiene 40 freigegeben ist. In Fig. 4 ist die Stellung dargestellt, bei der sich die geführten Elemente 21 jeweils in den Freigabebereichen 20 der Leitschienen 40 bzw. der Führung 12 befinden. Dies ermöglicht es, dass das Verschlussorgan durch entsprechendes Verschwenken um die Schwenkachsen 25 und 26 im Schließzustand parallel in Richtung hin zu einem der Ventilsitze 3 und 4 verstellt werden kann. In diesen Freigabebereichen 20 befindet sich in diesem Ausführungsbeispiel, wie auch in anderen günstigen Ausführungsbeispielen, der Erfindung jeweils ein Stellelement 18, welches nachfolgend weiter unten noch erläutert wird.

Wie eingangs bereits erläutert, können die nachfolgend noch genauer beschriebenen Dichtungen 7 und 8 sowohl in die Ventilsitze 3 und 4 als auch in das Verschlussorgan 2 integriert bzw. an diesem fixiert sein. Im hier realisierten Ausführungsbeispiel sind die Dichtungen 7 und 8 jeweils in einen der Ventilsitze 3 und 4 integriert bzw. dort befestigt. Genauso gut könnten aber wie gesagt die Dichtungen 7 und 8 auch am Verschlussorgan 2 und insbesondere an dessen Gegensitz 35 befestigt bzw. dort integriert sein. Im gezeigten Ausführungsbeispiel dienen die Dichtungen 7 und 8 jedenfalls dazu, im Schließzustand sowohl am Verschlussorgan 2 bzw. an dessen Gegensitz 35 und zumindest einem der Ventilsitze 3 und 4 gleichzeitig anzuliegen, um so vorzugsweise das Verschlussorgan 2 gegen den jeweiligen Ventilsitz 3 oder 4 abzudichten.

Eingangs wurde bereits auch erwähnt, dass erfindungsgemäße Verschlusseinrichtungen 1 besonders gut dann geeignet sind, wenn Öffnungen 5 und 6 mit einem möglichst großen Öffnungsquerschnitt benötigt werden. In diesem Sinne beträgt der Durchmesser 19 des Verschlussorgans 2 erfindungsgemäßer Verschlusseinrichtungen 1 günstigerweise zumindest 600 mm.

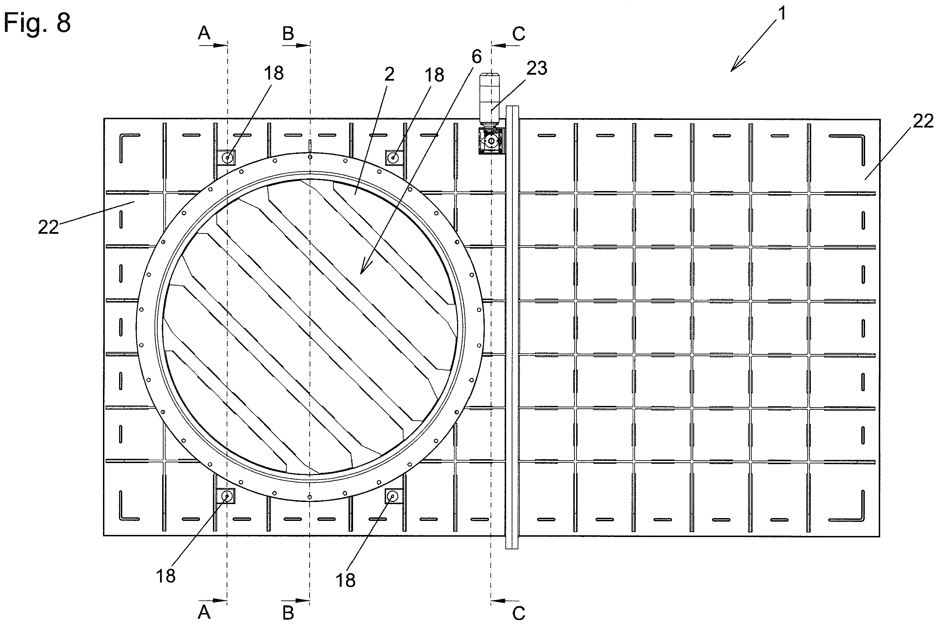

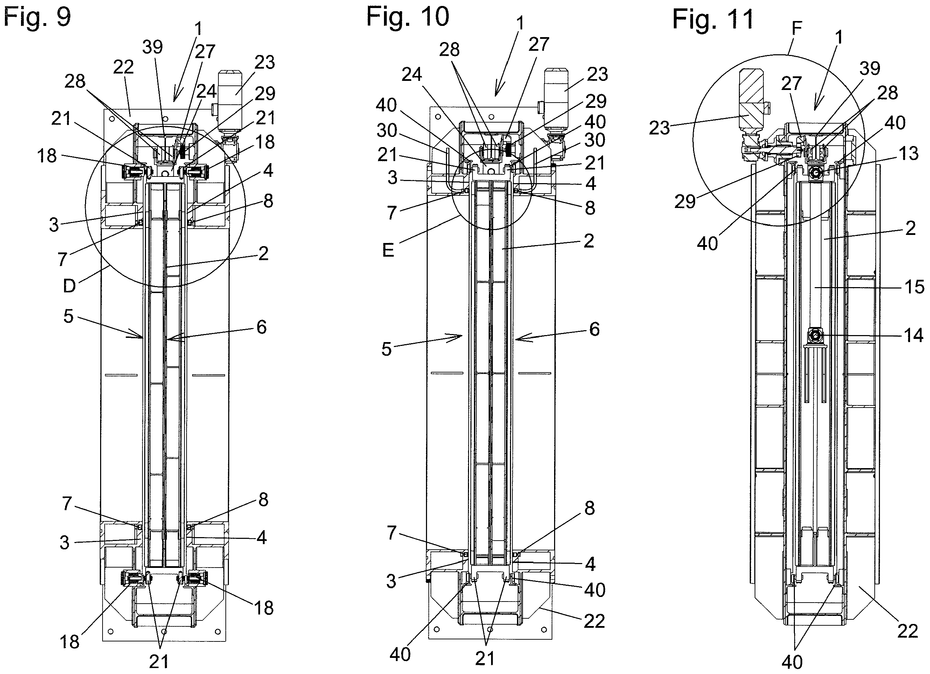

Fig. 8 zeigt eine Seitenansicht auf die Verschlusseinrichtung 1 bzw. deren Gehäuse 22. Das Verschlussorgan 2 befindet sich in einer Stellung, die es aus dieser Perspektive gesehen sowohl im Zwischenzustand als auch im Schließzustand einnimmt. Fig. 9 zeigt den Vertikalschnitt entlang der Schnittebene AA aus Fig. 8, also im Bereich der Stellelemente 18. Fig. 10 zeigt einen dazu parallelen Vertikalschnitt entlang der Schnittlinie BB aus Fig. 8. Fig. 11 zeigt einen wiederum dazu parallelen Vertikalschnitt entlang der Schnittlinie CC aus Fig. 8. Der in Fig. 11 gekennzeichnete Bereich F ist in Fig. 19 vergrößert dargestellt. In ihm sind der Motor 23 und das von ihm angetriebene Zahnrad 29 zu sehen. Das Zahnrad 29 greift in die am Schlitten 24 fixierte Zahnstange 27 ein. Durch Drehen des Zahnrades 29 wird der Schlitten 24 samt Verschlussorgan 2 entlang der Führung 12 zwischen dem Öffnungszustand und dem Zwischenzustand verschoben. Weiters ist in Fig. 19 auch noch die Führung der geführten Elemente 21 an den Leitschienen 40 gut zu erkennen.

Die Fig. 12, 13, 14 und 15 zeigen den Bereich D aus Fig. 9 vergrößert, wobei verschiedene Zustände dargestellt sind. Fig. 12 zeigt den Zwischenzustand, in dem die in den Ventilsitzen 3 und 4 verankerten Dichtungen 7 und 8 nicht am Verschlussorgan 2 bzw. dessen Gegensitzen 35 anliegen und das Verschlussorgan 2 somit ohne Kontakt mit den Ventilsitzen 3 und 4 aber in Deckung mit den Öffnungen 5 und 6 angeordnet ist. In Fig. 12 ist gut zu sehen, wie in diesem Ausführungsbeispiel auf den zwei einander gegenüberliegenden Seiten des Verschlussorgans 2 jeweils ein elastisches Stellelement 18 zum Ausrichten des Verschlussorgans 2 in einer vorgegebenen bzw. vorgebbaren Zwischenstellung zwischen den Ventilsitzen 3 und 4 angeordnet ist. Diese Stellelemente 18 sind beide im Gehäuse 22 gelagert bzw. fixiert. Sie weisen beide einen Stempel 32 auf, der von einem Federkörper 33 in Richtung hin zum Verschlussorgan 2 vorgespannt ist. Die Stärke der Vorspannung bzw. auch die Ausgangsposition des Stempels 32 können jeweils mittels einer Verstellschraube 34 des jeweiligen Stellelements 18 eingestellt werden. Natürlich könnten die Verstellschrauben 34, welche hier von Hand betätigbar sind, auch durch motorische Antriebe wie Schneckengetriebe, Spindelgetriebe zur motorischen Verstellung der Ausgangsposition und/oder der Vorspannung am Stempel 32 ersetzt sein. Die Stempel 32 wirken in dieser Stellung des Verschlussorgans 2 jeweils auf die geführten Elemente 21, welche fix am Verschlussorgan 2 angeordnet sind. Mittels der Stellelemente 18 wird das Verschlussorgan, soweit keine andere Kraft auf es wirkt, in der durch die Stellelemente 18 vorgegebenen Zwischenstellung zwischen den Ventilsitzen 3 und 4 ausgerichtet. Diese Zwischenstellung ist hier, wie gegebenenfalls auch in anderen Ausführungsbeispielen günstigerweise mittig zwischen den Ventilsitzen 3 und 4 gewählt, sodass es beim Bewegen des Verschlussorgans von dem in Fig. 12 dargestellten Zwischenzustand in den Öffnungszustand und zurück nicht zu einer Kollision zwischen dem Verschlussorgan 2 und den Ventilsitzen 3 und 4 bzw. den Dichtungen 7 und 8 kommen kann. Die Stellelemente 18 halten vielmehr das jeweilige geführte Element 21 in der Zwischenstellung so, dass dies dann beim Verschieben des Verschlussorgans entlang der Führung 12 problemlos auf die Leitschienen 40 überführt werden kann. Fig. 13 zeigt denselben Schnitt, allerdings in einem anderen Betriebszustand. Auch in Fig. 13 befindet sich das Verschlussorgan 2 noch in der Zwischenstellung zwischen den Ventilsitzen 3 und 4. Durch Beaufschlagen der Hohlräume 9 der Dichtungen 7 und 8 mit Druckmedium sind die Dichtungen 7 und 8 in Fig. 13 nun aber an das Verschlussorgan 2 bzw. dessen Gegensitze 35 angedrückt. Es wurde somit ein Schließzustand des Verschlussorgans 2 erreicht, in dem das Verschlussorgan 2 mittels der Dichtung 7 und 8 an den Ventilsitzen 3 und 4 zumindest anliegt. Die Stellelemente 18 halten das Verschlussorgan dabei in Fig. 13 nach wie vor in der Zwischenstellung. Dies kann sich allerdings ändern, sobald ein Differenzdruck 36 auf das Verschlussorgan 2 einwirkt. In Fig. 14 ist eine Situation dargestellt, bei der von rechts ein Differenzdruck 36 auf das Verschlussorgan 2 wirkt, sodass das Verschlussorgan 2 im Schließzustand in Richtung hin zum linken Ventilsitz 3 parallel verstellt wird. Dabei wird die Dichtung 7 in der hier dargestellten Situation eingedrückt und der Gegensitz 35 stützt das Verschlussorgan 2 am Ventilsitz 3 vollflächig ab. Auf der anderen Seite verliert die Dichtung 8 dabei in diesem Ausführungsbeispiel den Kontakt zum dortigen Gegensitz 35 des Verschlussorgans 2. Dies ändert aber nichts daran, dass sich das Verschlussorgan 2 nach wie vor im Schließzustand befindet, da zumindest eine der Dichtungen, hier nämlich die Dichtung 7 nach wie vor für eine entsprechende Abdichtung sorgt.

Die aus dem Differenzdruck 36 resultierende Kraft auf das Verschlussorgan 2 sorgt dafür, dass in Fig. 14 der Stempel 32 des linken Stellelements 18 unter Kompression des Federkörpers 33 eingedrückt wird, während auf der anderen, also rechten Seite in Fig. 14 das geführte Element 21 den Kontakt zum dortigen Stempel 32 des rechten Stellelements 18 verliert.

Sobald, ausgehend von der Situation gemäß Fig. 14, der Differenzdruck 36 ausreichend abgebaut ist, sorgt das Stellelement 18 auf der linken Seite auf Fig. 14 wieder für eine Rückstellung des Verschlussorgans 2 in die Zwischenstellung gemäß Fig. 13, indem der Federkörper 33 den Stempel 32 des linken Stellelements wieder nach außen drückt. Fig. 15 zeigt die gegenläufige Situation, bei der ein Differenzdruck 36 von der rechten Seite her auf das Verschlussorgan 2 wirkt und dieses mit seinem Gegensitz 35 unter Kompression der Dichtung 8 an den Ventilsitz 4 drückt. Es gilt entsprechend das zu Fig. 14 Geschilderte andersherum, sodass zusätzliche Erläuterungen hierzu entfallen können.

Mit Verweis auf Fig. 8 und 9 wird noch darauf hingewiesen, dass in diesem Ausführungsbeispiel, wie auch in anderen bevorzugten Ausgestaltungsformen das Verschlussorgan 2 mit seinen geführten Elementen 21 im Schließzustand und im Zwischenzustand oben und unten jeweils zwischen zwei Stellelementen 18 gelagert ist. Die in den Fig. 12 bis 15 jeweils nicht sichtbaren unteren Stellelemente 18 funktionieren wie die in Fig. 12 bis 15 dargestellten oberen Stellelemente 18, sodass hierzu zusätzliche Erläuterungen ebenfalls entfallen können.

Die Fig. 16, 17 und 18 zeigen vergrößert den Bereich E aus der Fig. 10 in verschiedenen Betriebszuständen. Fig. 16 zeigt den Zwischenzustand. In diesem ist das Verschlussorgan 2 ohne Kontakt mit den Ventilsitzen 3 und 4 zwischen diesen angeordnet. Es befindet sich dabei in Deckung mit den Öffnungen 5 und 6. Die Dichtungen 7 und 8 befinden sich jeweils in einer zurückgezogenen Position. Ihre Hohlräume 9 sind nicht mit Druckmedium beaufschlagt. Oberhalb der Dichtungen 7 und 8 sind auch die Leitschienen 40 der Führung 12 zu sehen, welche die geführten Elemente 21 und damit das Verschlussorgan 2 führen, wenn sich die geführten Elemente 21 nicht in den Freigabebereichen 20 befinden.

Ausgehend von Fig. 16 können die Hohlräume 9 der Dichtungen 7 und 8 von einer Druckquelle 10 über die Druckleitungen 30 mit Druckmedium beaufschlagt werden. Hierdurch gelangen sie beide in der Zwischenstellung des Verschlussorgans 2 gemäß Fig. 17 in Kontakt mit dem Verschlussorgan 2 bzw. dessen Gegensitzen 35, sodass ein Schließzustand erreicht wird. In Fig. 17 liegen beide Dichtungen 7 und 8 am Verschlussorgan 2 an. Das Verschlussorgan 2 liegt somit mittels beider Dichtungen 7 und 8 an den Ventilsitzen 3 und 4 an. Über eine entsprechende Drucksteuerung kann hierbei eine entsprechend druckfeste Abdichtung erreicht werden. Kommt es nun zu einer auf das Verschlussorgan 2 wirkenden Druckdifferenz 36, so kann das Verschlussorgan 2 hierdurch so weit parallel verschoben werden, dass auf einer Seite, in Fig. 18 auf der Seite der Dichtung 8, die Dichtung zusammengedrückt wird, sodass der dort vorhandene Gegensitz 35 des Verschlussorgans 2 am Sitz 4 zur Anlage kommt und von diesem dann abgestützt wird. Die Abdichtung ist dabei über die Dichtung 8 nach wie vor gegeben. Die Dichtung auf der anderen Seite, hier die Dichtung 7, kann dabei in Kontakt mit dem Verschlussorgan 2 bzw. dessen Gegensitz 35 bleiben oder, wie in Fig. 18 dargestellt, vom Gegensitz 35 und damit vom Verschlussorgan 2 abgehoben werden. Für eine Druckdifferenz 36 in die andere Richtung gilt Entsprechendes anders herum.

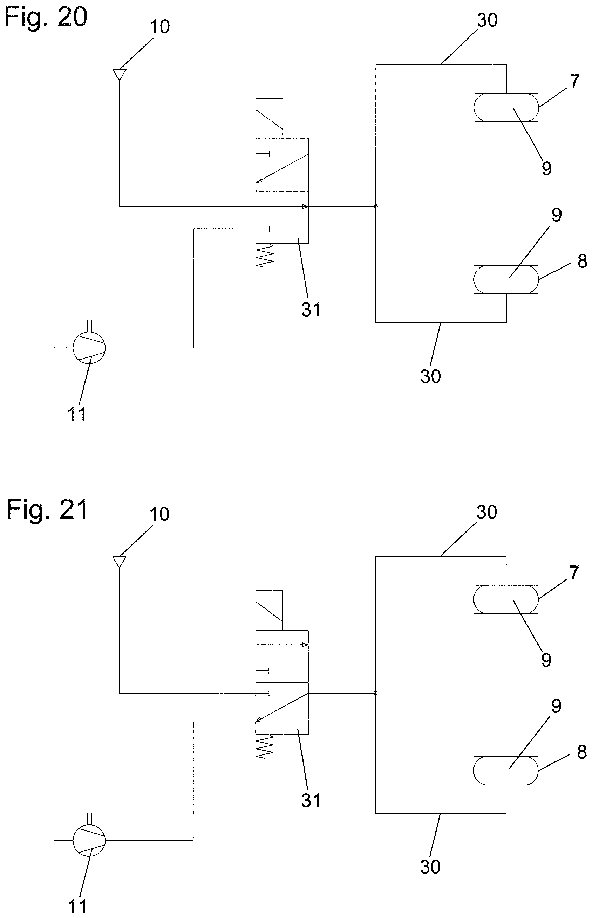

Die Fig. 20 und 21 zeigen nun schematisiert ein Schaltungsschema, welches pneumatisch oder hydraulisch ausgeführt sein kann. Mit dieser beispielhaft gezeigten Schaltung können die Hohlräume 9 der Dichtungen 7 und 8 mit Druckmedium beaufschlagt werden. Darüber hinaus kann erfindungsgemäß auch das Druckmedium wieder aus den Hohlräumen 9 abgesaugt werden. Hierzu sind in diesem Ausführungsbeispiel gemäß der Fig. 20 und 21 sowohl die Druckquelle 10 als auch die erfindungsgemäße Saugvorrichtung 11, hier beispielhaft in Form einer Pumpe, über das Schaltventil 31 und die Druckleitungen 30 mit den Hohlräumen 9 der Dichtungen 7 und 8 verbunden. In der Stellung des Schaltventils 31 gemäß der Fig. 20 werden die Hohlräume 9 beider Dichtungen 7 und 8 von der Druckquelle 10 mit Druckmedium beaufschlagt. In der Schaltstellung des Schaltventils 31 gemäß Fig. 21 sind die Hohlräume 9 über die Druckleitungen 30 mit der Saugvorrichtung 11 in Form einer Pumpe verbunden. Durch diese erfindungsgemäße Saugvorrichtung 11 kann das Druckmedium aktiv aus den Hohlräumen 9 der Dichtungen 7 und 8 abgesaugt werden, sodass diese vollständig in ihre zurückgezogene Position gemäß der Fig. 12 und 16 gebracht werden und es beim Bewegen des Verschlussorgans 2 zwischen dem Öffnungszustand und dem Zwischenzustand nicht zu einer Beschädigung der Dichtung 7 und 8 kommen kann.

Im bislang diskutierten Ausführungsbeispiel gemäß der Fig. 1 bis 21 ist auf beiden Seiten des Verschlussorgans 2 jeweils eine Dichtung 7 und 8 vorhanden. Der Vollständigkeit halber wird an dieser Stelle aber noch einmal darauf hingewiesen, dass auch Ausführungsbeispiele der Erfindung denkbar sind, bei denen nur eine der beiden Dichtungen 7 und 8 vorhanden ist. Die Dichtungen 7 und 8 können, wie eingangs bereits erläutert, fix am Verschlussorgan 2 oder, wie hier im Ausführungsbeispiel realisiert, fix am jeweiligen Ventilsitz 3 oder 4 angeordnet sein.

Abweichend von dem Ausführungsbeispiel gemäß der Fig. 20 und 21 könnten Druckquelle 10 und Saugvorrichtung 11 natürlich auch miteinander integriert z.B. als eine gemeinsame Pumpe ausgeführt sein. Man könnte dann evtl. sogar auf ein Schaltventil 31 verzichten. Es könnte aber auch in solchen Ausgestaltungsformen ein Schaltventil vorhanden sein, um die Druckleitung 30 zu schließen, wenn die Pumpe gerade nicht benötigt wird. Natürlich könnte die Druckquelle 10 gemäß der Fig. 20 und 21 in einer weiteren Ausführungsform auch als separate Pumpe ausgeführt sein. Darüber hinaus könnte diese Saugvorrichtung 11 grundsätzlich auch als eine andere zum Absaugen geeignete, insbesondere motorisch betriebene, Einrichtung ausgeführt sein.

Fig. 22 zeigt noch eine alternative Ausführung der Aufhängung des Verschlussorgans 2. In der Variante gemäß Fig. 22 sind der Schwenkhebel 15 und die Gelenke 13 und 14 durch eine Biegefeder 17 ersetzt, welche quer zu ihrer Längserstreckung 16 ausgelenkt werden kann, um das Verschlussorgan pendelartig anzuordnen bzw. im Schließzustand parallel verstellen zu können. Auch in Fig. 22 ist das Verschlussorgan 2 in etwa mittig an dieser Aufhängung befestigt. Vorzugsweise erfolgt die Aufhängung des Verschlussorgans 2 am Schwenkhebel 14 oder an der Biegefeder 17 oder Kombinationen daraus im mittleren Drittel des Verschlussorgans 2.

**Legende zu den Hinweisziffern:**

| | | | |
|---|---|---|---|
| 1 | Verschlusseinrichtung | 21 | geführtes Element |
| 2 | Verschlussorgan | 22 | Gehäuse |
| 3 | Ventilsitz | 23 | Motor |
| 4 | Ventilsitz | 24 | Schlitten |
| 5 | Öffnung | 25 | Schwenkachse |
| 6 | Öffnung | 26 | Schwenkachse |
| 7 | Dichtung | 27 | Zahnstange |
| 8 | Dichtung | 28 | Rollen |
| 9 | Hohlraum | 29 | Zahnrad |
| 10 | Druckquelle | 30 | Druckleitung |
| 11 | Saugvorrichtung | 31 | Schaltventil |
| 12 | Führung | 32 | Stempel |
| 13 | Gelenk | 33 | Federkörper |
| 14 | Gelenk | 34 | Verstellschraube |
| 15 | Schwenkhebel | 35 | Gegensitz |
| 16 | Längserstreckung | 36 | Differenzdruck |
| 17 | Biegefeder | 37 | erste Wand |
| 18 | Stellelement | 38 | zweite Wand |
| 19 | Durchmesser | 39 | Aufhängung |
| 20 | Freigabebereich | 40 | Leitschiene |

## Patentansprüche

1. Verschlusseinrichtung (1) mit einem Verschlussorgan (2) zum Verschließen einer, von einem Ventilsitz (3, 4) der Verschlusseinrichtung (1) umgebenen Öffnung (5, 6) der Verschlusseinrichtung (1), wobei die Verschlusseinrichtung (1) einen Öffnungszustand des Verschlussorgans (2), in dem das Verschlussorgan (2) die Öffnung (5, 6) zum Hindurchführen eines Gegenstandes durch die Öffnung (5, 6) zumindest teilweise, insbesondere vollständig, freigibt, und einen Zwischenzustand des Verschlussorgans (2), in dem das Verschlussorgan (2) ohne Kontakt mit dem Ventilsitz (3, 4) in Deckung mit der Öffnung (5, 6) gebracht ist, und einen Schließzustand des Verschlussorgans (2), in dem das Verschlussorgan (2) mittels einer Dichtung (7, 8) der Verschlusseinrichtung (1) am Ventilsitz (3, 4) zumindest anliegt, aufweist, wobei die Dichtung (7, 8) einen Hohlraum (9) aufweist, welcher von einer Druckquelle (10) der Verschlusseinrichtung (1) mit einem Druckmedium beaufschlagbar ist, und die Verschlusseinrichtung (1) eine Saugvorrichtung (11) zum Absaugen des Druckmediums aus dem Hohlraum (9) der Dichtung (7, 8) aufweist, **dadurch gekennzeichnet, dass** eine Führung (12) der Verschlusseinrichtung (1), entlang der das Verschlussorgan (2) zwischen dem Öffnungszustand und dem Zwischenzustand bewegbar ist, für den Schließzustand zumindest einen Freigabebereich (20) aufweist, in dem ein von der Führung (12) geführtes Element (21) des Verschlussorgans (2) zum Ermöglichen des Andrückens des Verschlussorgans (2) an den Ventilsitz (3, 4) freigegeben ist.

2. Verschlusseinrichtung (1) nach Anspruch 1, **dadurch gekennzeichnet, dass** die Druckquelle (10) und/oder die Saugvorrichtung (11) als eine, vorzugsweise gemeinsame, Pumpe ausgeführt ist bzw. sind.

3. Verschlusseinrichtung (1) nach Anspruch 1 oder 2, **dadurch gekennzeichnet, dass** die Verschlusseinrichtung (1) zwei, von jeweils einem Ventilsitz (3, 4) umgebene Öffnungen (5, 6) aufweist und das Verschlussorgan (2) in dem Zwischenzustand ohne Kontakt mit den Ventilsitzen (3, 4) zwischen den Öffnungen (5, 6) angeordnet ist und in dem Schließzustand zwischen jedem der Ventilsitze (3, 4) und dem Verschlussorgan (2) jeweils eine Dichtung (7, 8) angeordnet ist und das Verschlussorgan (2) mittels zumindest einer der Dichtungen (7, 8) an zumindest einem der Ventilsitze (3, 4) zumindest anliegt, wobei jede der Dichtungen (7, 8) einen Hohlraum (9) aufweist, welcher jeweils von der Druckquelle (10) der Verschlusseinrichtung (1) mit einem Druckmedium beaufschlagbar und von der Saugvorrichtung (11) absaugbar ist.

4. Verschlusseinrichtung (1) nach einem der Ansprüche 1 bis 3, **dadurch gekennzeichnet, dass** das Verschlussorgan (2) pendelartig angeordnet, vorzugsweise aufgehängt, ist und/oder im Schließzustand oder zwischen dem Zwischenzustand und dem Schließzustand parallel verstellbar an der Führung (12), entlang der das Verschlussorgan (2) zwischen dem Öffnungszustand und dem Zwischenzustand bewegbar ist, angeordnet, vorzugsweise aufgehängt, ist.

5. Verschlusseinrichtung (1) nach einem der Ansprüche 1 bis 4, **dadurch gekennzeichnet, dass** das Verschlussorgan (2) mittels zumindest zweier Gelenke (13, 14) der Verschlusseinrichtung (1) und zumindest einem zwischen den Gelenken (13, 14) angeordneten Schwenkhebel (15) der Verschlusseinrichtung (1) und/oder mittels zumindest einer quer zu ihrer Längserstreckung (16) auslenkbaren Biegefeder (17) der Verschlusseinrichtung (1) an der Führung (12), entlang der das Verschlussorgan (2) zwischen dem Öffnungszustand und dem Zwischenzustand bewegbar ist, angeordnet, vorzugsweise aufgehängt, ist.

6. Verschlusseinrichtung (1) mit einem Verschlussorgan (2) zum Verschließen von zwei, jeweils von einem Ventilsitz (3, 4) der Verschlusseinrichtung (1) umgebenen Öffnungen (5, 6) der Verschlusseinrichtung (1), wobei die Verschlusseinrichtung (1) einen Öffnungszustand des Verschlussorgans (2), in dem das Verschlussorgan (2) die Öffnungen (5, 6) zum Hindurchführen eines Gegenstandes durch die Öffnungen (5, 6) zumindest teilweise, insbesondere vollständig, freigibt, und einen Zwischenzustand des Verschlussorgans (2), in dem das Verschlussorgan (2) ohne Kontakt mit den Ventilsitzen (3, 4) zwischen den Öffnungen (5, 6) angeordnet ist, und einen Schließzustand des Verschlussorgans (2), in dem das Verschlussorgan (2) mittels zumindest einer Dichtung (7, 8) an zumindest einem der Ventilsitze (3, 4) zumindest anliegt, aufweist, wobei die Verschlusseinrichtung (1) zumindest ein, vorzugsweise elastisches, Stellelement (18) zum Ausrichten des Verschlussorgans (2) in einer vorgegebenen oder vorgebbaren Zwischenstellung zwischen den Ventilsitzen (3, 4) aufweist, **dadurch gekennzeichnet, dass** eine Führung (12) der Verschlusseinrichtung (1), entlang der das Verschlussorgan (2) zwischen dem Öffnungszustand und dem Zwischenzustand bewegbar ist, für den Schließzustand zumindest einen Freigabebereich (20) aufweist, in dem ein von der Führung (12) geführtes Element (21) des Verschlussorgans (2) zum Ermöglichen des Andrückens des Verschlussorgans (2) an einen der Ventilsitze (3, 4) freigegeben ist.

7. Verschlusseinrichtung (1) nach Anspruch 6, **dadurch gekennzeichnet, dass** die Verschlusseinrichtung (1) auf jeder von zwei einander gegenüberliegenden Seiten des Verschlussorgans (2) jeweils zumindest ein elastisches Stellelement (18) zum Ausrichten des Verschlussorgans (2) in der vorgegebenen oder vorgebbaren Zwischenstellung zwischen den Ventilsitzen (3, 4) aufweist.

8. Verschlusseinrichtung (1) nach Anspruch 6 oder 7, **dadurch gekennzeichnet, dass** sie die Merkmale zumindest eines der Ansprüche 1 bis 5 aufweist.

9. Verschlusseinrichtung (1) nach einem der Ansprüche 1 bis 8, **dadurch gekennzeichnet, dass** das Verschlussorgan (2) einen Durchmesser (19) von zumindest 600 mm und/oder eine Masse von zumindest 100 kg aufweist.

10. Verschlusseinrichtung (1) nach einem der Ansprüche 1 bis 9, **dadurch gekennzeichnet, dass** die Führung (12), entlang der das Verschlussorgan (2) zwischen dem Öffnungszustand und dem Zwischenzustand bewegbar ist, eine Linearführung ist.

11. Verschlusseinrichtung (1) nach einem der Ansprüche 1 bis 10, **dadurch gekennzeichnet, dass** die Führung (12) zumindest eine Leitschiene (40) zur Führung der geführten Elemente (21) aufweist, wobei die Leitschiene (40) den Freigabebereich (20) aufweist, in dem das von der Leitschiene (40) geführte Element (21) des Verschlussorgans (2) zum Ermöglichen des Andrückens des Verschlussorgans (2) an den Ventilsitz (3, 4) oder einen der Ventilsitze (3, 4) freigegeben ist.

12. Verschlusseinrichtung (1) nach Anspruch 11, **dadurch gekennzeichnet, dass** die Führung (12) mehrere Leitschienen (40) aufweist, welche fix mit Wänden (37, 38) eines Gehäuses (22) der Verschlusseinrichtung (1) verbunden sind.

## Claims

1. A closure device (1) having a closure element (2) for closing an opening (5, 6), surrounded by a valve seat (3, 4) of the closure device (1), of the closure device (1), wherein the closure device (1) has an opening state of the closure element (2), in which the closure element (2) frees, at least partially, in particular completely, the opening (5, 6) for the passage of an object through the opening (5, 6), and an intermediate state of the closure element (2), in which the closure element (2) is brought into alignment with the opening (5, 6) without contact with the valve seat (3, 4), and a closing state of the closure element (2), in which the closure element (2) at least contacts the valve seat (3, 4) by means of a seal (7, 8) of the closure device (1), wherein the seal (7, 8) has a hollow space (9) which can be acted upon by a pressure source (10) of the closure device (1) using a pressure medium, and the closure device (1) has a suction device (11) for drawing off the pressure medium from the hollow space (9) of the seal (7, 8), **characterized in that** a guide (12) of the closure device (1), along which the closure element (2) is movable between the opening state and the intermediate state, has at least one release region (20) for the closing state, in which an element (21), guided by the guide (12), of the closure element (2) is released to enable pressing of the closure element (2) against the valve seat (3, 4).

2. A closure device (1) according to claim 1, **characterized in that** the pressure source (10) and/or the suction device (11) is/are in the form of a, preferably common, pump.

3. A closure device (1) according to claim 1 or 2, **characterized in that** the closure device (1) has two openings (5, 6), each surrounded by a valve seat (3, 4), and the closure element (2) is in the intermediate state arranged between the openings (5, 6) without contact with the valve seats (3, 4) and in the closing state there is a respective seal (7, 8) arranged between each of the valve seats (3, 4) and the closure element (2) and the closure element (2) at least contacts at least one of the valve seats (3, 4) by means of at least one of the seals (7, 8), wherein each of the seals (7, 8) has a hollow space (9) which in each case can be acted upon by the pressure source (10) of the closure device (1) using a pressure medium and can be drawn off by the suction device (11).

4. A closure device (1) according to any one of claims 1 to 3, **characterized in that** the closure element (2) is arranged in the manner of a pendulum, is preferably suspended, and/or in the closing state or between the intermediate state and the closing state is arranged, preferably suspended, on the guide (12), along which the closure element (2) is movable between the opening state and the intermediate state, in a manner adjustable in a parallel manner.

5. A closure device (1) according to any one of claims 1 to 4, **characterized in that** the closure element (2) is arranged, preferably suspended, on the guide (12), along which the closure element (2) is movable between the opening state and the intermediate state, by means of at least two articulations (13, 14) of the closure device (1) and at least one pivot lever (15), arranged between the articulations (13, 14) of the closure device (1) and/or by means of at least one flexion spring (17), deflectable transversely to its longitudinal extension (16), of the closure device (1).

6. A closure device (1) having a closure element (2) for closing two openings (5, 6), surrounded in each case by a valve seat (3, 4) of the closure device (1), wherein the closure device (1) has an opening state of the closure element (2), in which the closure element (2) frees, at least partially, in particular completely, the openings (5, 6) for the passage of an object through the openings (5, 6), and an intermediate state of the closure element (2), in which the closure element (2) is arranged between the openings (5, 6) without contact with the valve seats (3, 4), and a closing state of the closure element (2), in which the closure element (2) at least contacts at least one of the valve seats (3, 4) by means of at least one seal (7, 8), wherein the closure device (1) has at least one, preferably elastic, adjustment element (18) for orientation of the closure element (2) in a predetermined or predeterminable intermediate position between the valve seats (3, 4), **characterised in that** a guide (12) of the closure device (1), along which the closure element (2) is movable between the opening state and the intermediate state, has at least one release region (20) for the closing state, in which an element (21), guided by the guide (12), of the closure element (2) is released to enable pressing of the closure element (2) against one of the valve seats (3, 4).

7. A closure device (1) according to claim 6, **characterized in that** on each of two facing sides of the closure element (2), the closure device (1) has in each case at least one elastic adjustment element (18) for orientation of the closure element (2) in the predetermined or predeterminable intermediate position between the valve seats (3, 4).

8. A closure device (1) according to claim 6 or 7, **characterized in that** it has the features of at least one of claims 1 to 5.

9. A closure device (1) according to any one of claims 1 to 8, **characterized in that** the closure element (2) has a diameter (19) of at least 600 mm and/or a mass of at least 100 kg.

10. A closure device (1) according to any one of claims 1 to 9, **characterized in that** the guide (12), along which the closure element (2) is movable between the opening state and the intermediate state, is a linear guide.

11. A closure device (1) according to any one of claims 1 to 10, **characterized in that** the guide (12) has at least one guide bar (40) to guide the guided elements (21), wherein the guide bar (40) has the release region (20) in which the element (21), guided by the guide bar (40), of the closure element (2) is released to enable the pressing of the closure element (2) against the valve seat (3, 4) or one of the valve seats (3, 4).

12. A closure device (1) according to claim 11, **characterized in that** the guide (12) has a plurality of guide bars (40) which are connected to walls (37, 38) of a housing (22) of the closure device (1) in a fixed manner.

## Revendications

1. Dispositif de fermeture (1) avec un organe de fermeture (2) pour fermer une ouverture (5, 6) du dispositif de fermeture (1) entourée par un siège de soupape (3, 4) du dispositif de fermeture (1), le dispositif de fermeture (1) présentant un état ouvert de l'organe de fermeture (2) dans lequel l'organe de fermeture (2) dégage au moins partiellement, en particulier complètement, l'ouverture (5, 6) pour le passage d'un objet à travers l'ouverture (5, 6), et un état intermédiaire de l'organe de fermeture (2) dans lequel l'organe de fermeture (2) est amené en recouvrement de l'ouverture (5, 6) sans contact avec le siège de soupape (3, 4), et un état fermé de l'organe de fermeture (2) dans lequel l'organe de fermeture (2) est au moins en appui sur le siège de soupape (3, 4) au moyen d'un joint d'étanchéité (7, 8) du dispositif de fermeture (1), le joint d'étanchéité (7, 8) présentant une cavité (9) qui peut être soumis à l'action d'un fluide sous pression par une source de pression (10) du dispositif de fermeture (1), et le dispositif de fermeture (1) étant muni d'un dispositif d'aspiration (11) pour aspirer le fluide sous pression hors de la cavité (9) du joint d'étanchéité (7, 8), **caractérisé en ce qu'**un guide (12) du dispositif de fermeture (1), le long duquel l'organe de fermeture (2) peut être déplacé entre l'état ouvert et l'état intermédiaire, présente au moins une zone de libération (20) pour l'état fermé, dans laquelle un élément (21) de l'organe de fermeture (2) guidé par le guide (12) est libéré pour permettre de presser l'organe de fermeture (2) contre le siège de soupape (3, 4).

2. Dispositif de fermeture (1) selon la revendication 1, **caractérisé en ce que** la source de pression (10) et/ou le dispositif d'aspiration (11) est/sont conçu(e)(s) sous la forme pompe, de préférence commune.

3. Dispositif de fermeture (1) selon la revendication 1 ou 2, **caractérisé en ce que** le dispositif de fermeture (1) est muni de deux ouvertures (5, 6) entourées chacune par un siège de soupape (3, 4), et l'organe de fermeture (2) est disposé, à l'état intermédiaire sans contact avec les sièges de soupape (3, 4), entre les ouvertures (5, 6), et, à l'état fermé, un joint d'étanchéité (7, 8) est disposé entre chacun des sièges de soupape (3, 4) et l'organe de fermeture (2), et l'organe de fermeture (2) est au moins en appui sur au moins l'un des sièges de soupape (3, 4) au moyen d'au moins l'un des joints d'étanchéité (7, 8), chacun des joints d'étanchéité (7, 8) étant muni d'une cavité (9) qui chacune peut être soumise à l'action d'un fluide sous pression par la source de pression (10) du dispositif de fermeture (1) et peut être vidée par aspiration par le dispositif d'aspiration (11).

4. Dispositif de fermeture (1) selon l'une des revendications 1 à 3, **caractérisé en ce que** l'organe de fermeture (2) est disposé de façon pendulaire, de préférence il est suspendu, et/ou, à l'état fermé ou entre l'état intermédiaire et l'état fermé, il est disposé, de préférence suspendu, de manière à pouvoir être réglé parallèlement sur le guide (12) le long duquel l'organe de fermeture (2) est mobile entre l'état ouvert et l'état intermédiaire.

5. Dispositif de fermeture (1) selon l'une des revendications 1 à 4, **caractérisé en ce que** l'organe de fermeture (2) est disposé, de préférence suspendu, sur le guide (12) le long duquel l'organe de fermeture (2) est mobile entre l'état ouvert et l'état intermédiaire, au moyen d'au moins deux articulations (13, 14) du dispositif de fermeture (1) et d'au moins un levier pivotant (15) du dispositif de fermeture (1) disposé entre les articulations (13, 14) et/ou au moyen d'au moins un ressort de flexion (17) du dispositif de fermeture (1), qui peut être fléchi transversalement à son extension longitudinale (16).

6. Dispositif de fermeture (1) avec un organe de fermeture (2) pour fermer deux ouvertures (5, 6) du dispositif de fermeture (1) entourées chacune par un siège de soupape (3, 4) du dispositif de fermeture (1), le dispositif de fermeture (1) présentant un état ouvert de l'organe de fermeture (2) dans lequel l'organe de fermeture (2) dégage au moins partiellement, en particulier complètement, les ouvertures (5, 6) pour le passage d'un objet à travers les ouvertures (5, 6), et un état intermédiaire de l'organe de fermeture (2), dans lequel l'organe de fermeture (2) est disposé entre les ouvertures (5, 6) sans contact avec les sièges de soupape (3, 4), et un état fermé de l'organe de fermeture (2), dans lequel l'organe de fermeture (2) est au moins en appui sur au moins un des sièges de soupape (3, 4) au moyen d'au moins un joint d'étanchéité (7, 8), le dispositif de fermeture (1) étant muni d'au moins un élément de réglage (18), de préférence élastique, pour aligner l'organe de fermeture (2) entre les sièges de soupape (3, 4) dans une position intermédiaire prédéterminée ou pouvant être prédéterminée, **caractérisé en ce qu'**un guide (12) du dispositif de fermeture (1), le long duquel l'organe de fermeture (2) peut être déplacé entre l'état ouvert et l'état intermédiaire, présente au moins une zone de libération (20) pour l'état fermé, dans laquelle un élément (21) de l'organe de fermeture (2) guidé par le guide (12) est libéré pour permettre de presser l'organe de fermeture (2) contre l'un des sièges de soupape (3, 4).

7. Dispositif de fermeture (1) selon la revendication 6, **caractérisé en ce que** le dispositif de fermeture (1) est muni sur chacun de deux côtés opposés de l'organe de fermeture (2) d'au moins un élément de réglage élastique (18) pour aligner l'organe de fermeture (2) entre les sièges de soupape (3, 4) dans la position intermédiaire prédéterminée ou pouvant être prédéterminée.

8. Dispositif de fermeture (1) selon la revendication 6 ou 7, **caractérisé en ce qu'**il présente les caractéristiques d'au moins l'une des revendications 1 à 5.

9. Dispositif de fermeture (1) selon l'une des revendications 1 à 8, **caractérisé en ce que** l'organe de fermeture (2) a un diamètre (19) d'au moins 600 mm et/ou une masse d'au moins 100 kg.

10. Dispositif de fermeture (1) selon l'une des revendications 1 à 9, **caractérisé en ce que** le guide (12) le long duquel l'organe de fermeture (2) est mobile entre l'état ouvert et l'état intermédiaire est un guide linéaire.

11. Dispositif de fermeture (1) selon l'une des revendications 1 à 10, **caractérisé en ce que** le guide (12) est muni d'au moins un rail de guidage (40) pour le guidage des éléments guidés (21), le rail de guidage (40) étant muni de la zone de libération (20) dans laquelle l'élément (21) de l'organe de fermeture (2) guidé par le rail de guidage (40) est libéré pour permettre de presser l'organe de fermeture (2) contre le siège de soupape (3, 4) ou l'un des sièges de soupape (3, 4).

12. Dispositif de fermeture (1) selon la revendication 11, **caractérisé en ce que** le guide (12) est muni de plusieurs rails de guidage (40) qui sont reliés de manière fixe à des parois (37, 38) d'un boîtier (22) du dispositif de fermeture (1).
